(19) **Europäisches Patentamt**

**European Patent Office**

**Office européen des brevets**

(11) **EP 1 223 341 A2**

(12) **EUROPÄISCHE PATENTANMELDUNG**

(43) Veröffentlichungstag:
**17.07.2002 Patentblatt 2002/29**

(51) Int Cl.$^7$: **F02P 3/08**, F02P 3/05

(21) Anmeldenummer: **02000003.0**

(22) Anmeldetag: **02.01.2002**

(84) Benannte Vertragsstaaten:
**AT BE CH CY DE DK ES FI FR GB GR IE IT LI LU MC NL PT SE TR**
Benannte Erstreckungsstaaten:
**AL LT LV MK RO SI**

(30) Priorität: **11.01.2001 DE 10100873**

(71) Anmelder: **SIEMENS AKTIENGESELLSCHAFT**
**80333 München (DE)**

(72) Erfinder:
• **Degen, Michael**
  **61352 Bad Homburg (DE)**
• **Erle, Lothar**
  **65779 Kelkheim (DE)**

(54) **Verfahren zum Einschalten einer induktiven Last**

(57) Bei einem Verfahren zum Einschalten einer induktiven Last, insbesondere einer Zündspule, deren Strom wiederholt zu einem jeweils vorgegebenen variablen Zeitpunkt einen vorgegebenen variablen Endwert erreichen soll, wird der Zeitabschnitt zwischen dem Einschalten und dem Erreichen mindestens eines vorgegebenen Zwischenwertes gemessen. Aus diesem Zeitabschnitt und dem mindestens einen vorgegebenen Zwischenwert wird die voraussichtliche Zeit vom Einschalten bis zum Erreichen des Endwertes berechnet. Ein folgendes Einschalten um die berechnete Zeit erfolgt vor dem jeweils vorgegebenen Zeitpunkt.

**EP 1 223 341 A2**

**Beschreibung**

Die Erfindung betrifft ein Verfahren zum Einschalten einer induktiven Last, insbesondere einer Zündspule, deren Strom wiederholt zu einem jeweils vorgegebenen variablen Zeitpunkt einen vorgegebenen variablen Endwert erreichen soll.

Um nach Anlegen einer Spannung an eine induktive Last zu einem bestimmten vorgegebenen Zeitpunkt einen vorgegebenen Strom zu erreichen, ist das Einschalten der Last um eine Zeit vor dem vorgegebenen Zeitpunkt erforderlich, die von der Steigung des Stromanstiegs abhängt. Diese wiederum ist abhängig von der Induktivität, der Batteriespannung, Übergangswiderständen und von der Temperatur.

Aufgabe der vorliegenden Erfindung ist es, das Einschalten der induktiven Last derart vorzunehmen, daß der Strom zu einem vorgegebenen Zeitpunkt einen vorgegebenen Wert erreicht. Insbesondere soll dadurch bei der elektronischen Zündung von Brennkraftmaschinen eine vorgegebene Zündenergie sichergestellt werden, die erforderlichenfalls in Abhängigkeit von Betriebsparametern der Brennkraftmaschine ebenso wie der Zündzeitpunkt stark variiert werden kann.

Diese Aufgabe wird erfindungsgemäß dadurch gelöst, daß der Zeitabschnitt zwischen dem Einschalten und dem Erreichen mindestens eines vorgegebenen Zwischenwertes gemessen wird, daß aus diesem Zeitabschnitt und dem mindestens einen vorgegebenen Zwischenwert die voraussichtliche Zeit vom Einschalten bis zum Erreichen des Endwertes berechnet wird und daß ein folgendes Einschalten um die berechnete Zeit vor dem jeweils vorgegebenen Zeitpunkt erfolgt.

Die Stromkurve bei Induktivitäten ist keine Gerade, sondern weist eine individuelle Krümmung auf, die von verschiedenen Einflußgrößen, wie Batteriespannung, Übergangswiderstände der Verkabelung und der Stecker, Widerstandsänderungen durch Temperatur oder Alterung, abhängig ist. Je nach Ausführung im einzelnen können mit dem erfindungsgemäßen Verfahren diese Einflußgrößen ausgeregelt werden.

Bei einer vorteilhaften Ausgestaltung ist beispielsweise vorgesehen, daß die Zeit mit Hilfe einer den Stromanstieg beim Anlegen einer im wesentlichen konstanten Spannung darstellenden Funktion berechnet wird, wobei vorzugsweise die Funktion in einem Speicher abgelegt ist. Mit dieser Ausgestaltung kann im wesentlichen eine sich bezüglich ihrer Steigung verändernde Stromkurve erfaßt werden.

Zur Berücksichtigung von Änderungen der Krümmung der Stromkurve kann das erfindungsgemäße Verfahren derart ausgebildet sein, daß die Funktion aus mehreren vorgegebenen Zwischenwerten und den diesen zugeordneten Zeiten berechnet wird.

Eine weitere vorteilhafte Ausgestaltung der Erfindung besteht darin, daß aus dem gemessenen Zeitabschnitt mindestens ein Parameter einer vorgegebenen Funktion berechnet wird und daß für das folgende Einschalten die berechnete Zeit unter Anwendung der Funktion, des mindestens einen Parameters und des Endwertes bestimmt wird.

Bei dieser Ausgestaltung ist vorzugsweise vorgesehen, daß die Funktion $i = î(1-e^{-t*R/L})$ ist, wobei i der Strom zum Zeitpunkt t, î der im Unendlichen erreichte Strom, R der Widerstand und L die Induktivität ist, und daß als Parameter R/L berechnet wird. Beispielsweise kann bei bekanntem î nach Erreichen eines Zwischenwertes dieser als i und die Dauer zwischen dem Einschalten und dem Erreichen des Zwischenwertes als t in die obengenannte Gleichung eingesetzt werden, worauf R/L berechnet wird. Mit dem berechneten R/L und dem gewünschten Endwert als i kann dann t als Zeitdauer zwischen dem Einschalten und dem Erreichen des Endwertes berechnet werden.

Das erfindungsgemäße Verfahren wird vorzugsweise im Prozessor eines Steuergerätes durchgeführt. Dabei kann zur Vermeidung von aufwendigen Rechnungen vorgesehen sein, daß die Funktion als Tabelle abgelegt ist, wobei jeweils eine Zeit bis zum Erreichen des vorgegebenen Zwischenwertes der dazugehörigen Zeit zwischen dem Einschalten und dem Erreichen des vorgegebenen Wertes zugeordnet ist.

Eine andere vorteilhafte Ausgestaltung der Erfindung besteht darin, daß die Zeit zwischen dem Einschalten und dem voraussichtlichen Erreichen des Endwertes nach dem Dreisatz unter Anwendung eines Korrekturwertes, der die Krümmung der Funktion darstellt, berechnet wird.

Sollte bei einem Anwendungsfall eine Änderung der Krümmung der Kurve vernachlässigbar sein, ist es ferner im Rahmen des erfindungsgemäßen Verfahrens möglich, daß die Zeit zwischen dem Einschalten und dem voraussichtlichen Erreichen des Endwertes nach dem Dreisatz berechnet wird.

Die Erfindung läßt zahlreiche Ausführungsformen zu. Eine davon ist schematisch in der Zeichnung anhand mehrerer Figuren dargestellt und nachfolgend beschrieben. Es zeigt:

Fig. 1 ein Strom-Zeitdiagramm zur Erläuterung des erfindungsgemäßen Verfahrens und

Fig. 2 ein Schaltbild einer Anordnung zur Durchführung des erfindungsgemäßen Verfahrens.

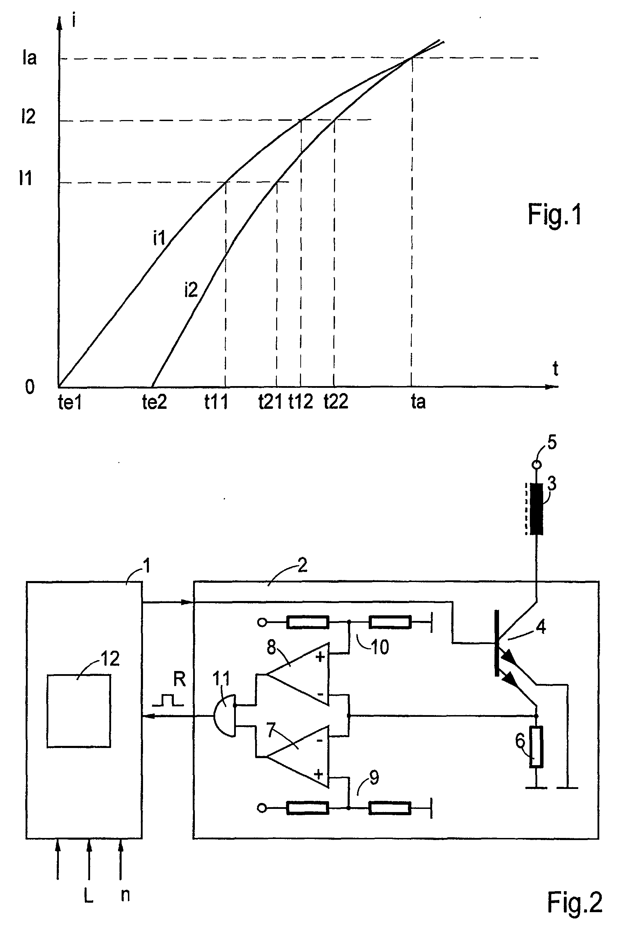

Fig. 1 zeigt den Stromverlauf beim Einschalten einer Zündspule, die zu einem vorgegebenen Abschaltzeitpunkt ta den Strom Ia (Endwert) erreicht haben soll. Unter verschiedenen Einflußgrößen folgt der Stromanstieg verschiedenen Kurven, von denen in Fig. 1 die Kurven i1 und i2 dargestellt sind, wobei die Einschaltzeitpunkte mit te1 und te2 bezeichnet sind.

Die Stromkurve i1 erreicht bei t11 den ersten vorgegebenen Zwischenwert I1 und bei t12 den zweiten vorgegebenen Zwischenwert I2. Die Stromkurve i2 erreicht die Zwischenwerte I1 und I2 entsprechend später, nämlich zu den Zeitpunkten t21 und t22.

Die Schaltungsanordnung gemäß Fig. 2 zeigt schematisch ein Steuergerät 1 und die Primärwicklung 3 einer Zündspule, die zwischen einem Schalttransistor 4 der Endstufe 2 und einem Betriebsspannungsanschluß 5 geschaltet ist. Die Endstufe ist einschließlich der Strommeßschaltung als Bauelement erhältlich. Die innere Beschaltung ist nur dargestellt, soweit es zum Verständnis der Erfindung erforderlich ist. Das Steuergerät 1 erhält verschiedene Größen, beispielsweise ein Inkrementsignal n, das die Drehzahl und den Kurbelwellenwinkel beinhaltet, und die Luftmenge L. Daraus wird der jeweils günstigste Zündzeitpunkt ta errechnet. Um die Zeitspanne ta - te vor diesem Zeitpunkt ta wird der Transistor 4 in den leitenden Zustand geschaltet.

Wie bereits im Zusammenhang mit Fig. 1 erläutert, ist diese Zeitspanne jedoch nicht konstant, weshalb mit Hilfe der Zwischenwerte und der dazugehörigen Zeiten t11 bis t22 der jeweils richtige Einschaltzeitpunkt t1 bzw. t2 berechnet wird. Dazu wird der Strom mit Hilfe eines Widerstandes 6, der in Reihe mit einem weiteren Emitter (Sensoremitter) des Transistors 4 geschaltet ist, gemessen. Die dem Strom entsprechende Spannung wird zwei Komparatoren 7, 8 zugeführt, denen über Spannungsteiler 9, 10 Spannungen zugeleitet werden, welche die Zwischenwerte darstellen. Durch Verknüpfung der Ausgangssignale der Komparatoren bei 11 entsteht ein Signal R, das bei Erreichen des ersten Zwischenwertes I1 auf einen positiven Pegel steigt und bei Erreichen des zweiten Zwischenwertes I2 wieder fällt. Da die Zwischenwerte gegeben und in einem Speicher 12 des Steuergerätes abgelegt sind, kann aus den Flanken des Signals R der jeweilige Stromverlauf berechnet und der Strom zum richtigen Zeitpunkt te eingeschaltet werden.

**Patentansprüche**

1. Verfahren zum Einschalten einer induktiven Last, insbesondere einer Zündspule, deren Strom wiederholt zu einem jeweils vorgegebenen variablen Zeitpunkt einen vorgegebenen variablen Endwert erreichen soll, **dadurch gekennzeichnet, daß** der Zeitabschnitt zwischen dem Einschalten und dem Erreichen mindestens eines vorgegebenen Zwischenwertes gemessen wird, daß aus diesem Zeitabschnitt und dem mindestens einen vorgegebenen Zwischenwert die voraussichtliche Zeit vom Einschalten bis zum Erreichen des Endwertes berechnet wird und daß ein folgendes Einschalten um die berechnete Zeit vor dem jeweils vorgegebenen Zeitpunkt erfolgt.

2. Verfahren nach Anspruch 1, **dadurch gekennzeichnet, daß** die Zeit mit Hilfe einer den Stromanstieg beim Anlegen einer im wesentlichen konstanten Spannung darstellenden Funktion berechnet wird.

3. Verfahren nach Anspruch 2, **dadurch gekennzeichnet, daß** die Funktion in einem Speicher abgelegt ist.

4. Verfahren nach Anspruch 2, **dadurch gekennzeichnet, daß** die Funktion aus mehreren vorgegebenen Zwischenwerten und den diesen zugeordneten Zeiten berechnet wird.

5. Verfahren nach Anspruch 1, **dadurch gekennzeichnet, daß** aus dem gemessenen Zeitabschnitt mindestens ein Parameter einer vorgegebenen Funktion berechnet wird und daß für das folgende Einschalten die berechnete Zeit unter Anwendung der Funktion, des mindestens einen Parameters und des Endwertes bestimmt wird.

6. Verfahren nach Anspruch 5, **dadurch gekennzeichnet, daß** die Funktion

$$i = \hat{\imath}(1-e^{-t*R/L})$$

ist,
wobei i der Strom zum Zeitpunkt t, î der im Unendlichen erreichte Strom, R der Widerstand und L die Induktivität ist, und daß als Parameter R/L berechnet wird.

7. Verfahren nach einem der Ansprüche 2 bis 4, **dadurch gekennzeichnet, daß** die Funktion als Tabelle abgelegt ist, wobei jeweils eine Zeit bis zum Erreichen des vorgegebenen Zwischenwertes der dazugehörigen Zeit zwischen dem Einschalten und dem Erreichen des Endwertes zugeordnet ist.

8. Verfahren nach Anspruch 1, **dadurch gekennzeichnet, daß** die Zeit zwischen dem Einschalten und dem voraussichtlichen Erreichen des Endwertes nach dem Dreisatz unter Anwendung eines Korrekturwertes, der die Krümmung der Funktion darstellt, berechnet wird.

9. Verfahren nach Anspruch 1, **dadurch gekennzeichnet, daß** die Zeit zwischen dem Einschalten und dem voraussichtlichen Erreichen des Endwertes nach dem Dreisatz berechnet wird.

Fig.1

Fig.2